(19) Europäisches Patentamt
European Patent Office
Office européen des brevets

(11) EP 0 733 546 B1

(12) EUROPÄISCHE PATENTSCHRIFT

(45) Veröffentlichungstag und Bekanntmachung des Hinweises auf die Patenterteilung:
**25.08.1999 Patentblatt 1999/34**

(51) Int. Cl.[6]: **B64G 1/36**, G05D 1/08

(21) Anmeldenummer: **96104293.4**

(22) Anmeldetag: **19.03.1996**

(54) **Verfahren zur Sonnensuche für einen dreiachsenstabilisierten Satelliten und dreiachsenstabilisierter Satellit**

Three axis stabilized spacecraft and method of sun acquisition

Véhicule spatial stabilisé à trois axes et procédé d'acquisition du soleil

(84) Benannte Vertragsstaaten:
**DE FR GB IT**

(30) Priorität: **22.03.1995 DE 19510371**

(43) Veröffentlichungstag der Anmeldung:
**25.09.1996 Patentblatt 1996/39**

(73) Patentinhaber:
**Daimler-Benz Aerospace Aktiengesellschaft**
**81663 München (DE)**

(72) Erfinder:
- **Surauer, Michael**
  **83339 Chieming (DE)**
- **Roche, Christian**
  **80796 München (DE)**
- **Fichter, Walter**
  **81371 München (DE)**

(56) Entgegenhaltungen:
**EP-A- 0 341 130**
**EP-A- 0 544 296**
**WO-A-93/04923**
**FR-A- 2 649 809**
**GB-A- 2 008 284**

EP 0 733 546 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.16.7/3.6

## Beschreibung

Die Erfindung betrifft ein Verfahren zur Sonnensuche für einen dreiachsenstabilisierten Satelliten gemäß dem Oberbegriff des Patentanspruchs 1 sowie einen dreiachsenstabilisierten Satelliten gemäß dem Oberbegriff des Patentanspruchs 9.

Aus der WO 93/04923 A1 ist eine Meßanordnung für die Anwendung bei der Lageregelung eines dreiachsenstabilisierten Satelliten sowie ein Verfahren zum Sonneneinfang aus einer beliebigen Anfangslage des Satelliten heraus, in der sich die Sonne nicht im Sichtbereich der Sonnensensoren befindet, bekannt. Diese Meßanordnung umfaßt Sonnensensoren zur Ermittlung der Sonnenrichtung bezuglich eines satellitenfesten Koordinatensystems sowie einen einachsig messenden Drehgeschwindigkeitskreisel. Das Gesichtsfeld bzw. der Meßbereich der Sonnensensoren soll in einer vorwahlbaren Ebene des Koordinatensystems insgesamt den vollen Winkel von $2\pi$ abdecken und senkrecht dazu in beiden Richtungen jeweils nur einen begrenzten Winkelbereich $< \pi/2$. Die zulässige Richtung der Meßachse des Drehgeschwindigkeitskreisels unterliegt dabei einer Einschränkung, die von der Weite des Gesichtsfeldes der Sonnensensoren senkrecht zu der vorwählbaren Ebene abhängt. Die dort genannten Bedingungen für die das Gesichtsfeld der Sonnensensoren in der vorwählbaren Ebene und senkrecht dazu definierenden Winkel $\alpha_1$ bzw. $\alpha_2$ sowie für den zulässigen Bereich des Winkels $\beta$, der zwischen der Meßachse des Drehgeschwindigkeitskreisels und der vorwählbaren Ebene aufgespannt wird, sind dort folgendermaßen definiert:

$$0 \leq \alpha_1 \leq 2\pi \quad (1a)$$

$$-\alpha_{2max} \leq \alpha_2 \leq \alpha_{2max} \quad (1b)$$

$$|\beta| \geq (\pi/2)-\alpha_{2max} \quad (1c)$$

Als vorwählbare Ebene, die vom Gesichtsfeld der Sonnensensoranordnung vollständig erfaßt werden soll, wird die XZ-Ebene des satellitenfesten Koordinatensystems bevorzugt, wobei etwa im Falle eines geostationären Erdsatelliten bei ordnungsgemäßer Ausrichtung die X-Achse als Rollachse in Bahnrichtung zeigt, die Z-Achse als Gierachse zum Erdmittelpunkt hin orientiert ist und die Y-Achse als Nickachse senkrecht auf den beiden anderen Achsen steht.

Es kann jedoch vorkommen, daß aufgrund von Anforderungen, die durch andere operationelle Manöver bedingt sind, die oben genannte, auf die Richtung der Meßachse des Drehgeschwindigkeitskreisels bezogene Bedingung nicht mehr erfüllt werden kann. Dies gilt beispielsweise für die Forderung

$$\beta_{max} \leq (\pi/2)-\alpha_{2max} \quad (2)$$

Außerdem stellt die o.g. Forderung, daß das Gesichtsfeld der Sonnensensoranordnung in der vorwählbaren Ebene den vollen Winkel von $2\pi$ umfassen solle, eine Einschränkung dar, die nicht immer zugelassen werden kann, und die auch aus Kostengrunden nicht optimal erscheint, da eine entsprechende Anzahl von Sonnensensoren vorhanden sein muß, um den gesamten Winkelbereich von $2\pi$ abzudecken. Weiterhin können bei Ausfall eines oder mehrerer Sonnensensoren Lücken im Gesichtsfeld auftreten, die dazu führen, daß die vorgesehenen Meß- und Auswerteverfahren sowie insbesondere auch das vorgesehene Verfahren zum Sonneneinfang nicht mehr durchführbar sind. Gleiches gilt auch, wenn das Rundum-Gesichtsfeld durch hineinragende Antennen oder sonstige am Satelliten angebrachte Vorrichtungen eingeschränkt wird.

Aufgabe der Erfindung ist es, ein Verfahren der eingangs genannten Art zur Sonnensuche für einen dreiachsenstabilisierten Satelliten bereitzustellen, welches auch funktioniert, wenn die oben definierten Einschränkungen hinsichtlich des Sonnensensor-Gesichtsfeldes sowie der Ausrichtung der Meßachse des Drehgeschwindigkeitskreisels nicht mehr eingehalten werden können, das also auch anwendbar ist, wenn das Gesichtsfeld der Sonnensensoranordnung in der vorwählbaren Ebene Lücken aufweist und die genannte Meßachse bezüglich dieses Gesichtsfeldes beliebig orientiert ist. Schließlich soll ein dreiachsenstabilisierter Satellit angegeben werden, bei dem aufgrund seiner vorrichtungsmäßigen Merkmale das erfindungsgemäße Verfahren zur Sonnensuche mit Erfolg durchführbar ist.

Die Aufgabe hinsichtlich des Verfahrens zur Sonnensuche wird mit Hilfe der im kennzeichmenden Teil des Patentanspruchs 1 genannten Merkmale gelöst. Demnach ist zusätzlich eine Schwungradvorrichtung zu verwenden, mit deren Hilfe ein Drehimpuls erzeugt wird, dessen zugehöriger Drehimpulsvektor $\underline{H}$ nicht parallel zur Richtung der Meßachse des Drehgeschwindigkeitskreisels orientiert sein darf. Vorausgesetzt ist dabei die Anwendung eines bestimmten Regelgesetzes, das (wie bereits aus der WO 93/04923 A1 bekannt) die parallel zur Meßachse des Drehgeschwindigkeitskreisels orientierte Drehgeschwindigkeitskompoente zu Null macht. Die Erzeugung des zusätzlichen Drehimpulses hat zur Folge, daß im Ergebnis des Regelvorganges lediglich höchstens eine Drehung des Satelliten um die Drehimpulsachse übrigbleibt. Diese Drehung wird in sehr vielen Fällen schon dazu ausreichen, daß die Sonne schließlich im Gesichtsfeld der Sonnensensoranordnung auftaucht.

In den Unteransprüchen 2 bis 8 sind vorteilhafte Ausführungsformen zweier Varianten des erfindungsgemäßen Verfahrens wiedergegeben, welche einmal den Fall betreffen, daß das Gesichtsfeld der Sonnensensoranordnung in der vorwählbaren Ebene einen Winkel von mindestens $\pi$ lückenlos abdeckt, und zum anderen den Fall, daß das Gesichtsfeld einen oder mehrere, von Lücken unterbrochene Teilsektoren aufweist, von denen keiner einen Winkel von $\pi$ abdeckt.

In Anspruch 9 sind Merkmale eines dreiachsenstabilisierten Satelliten definiert, welche erforderlich sind, um das erfindungsgemäße Verfahren mit Erfolg durchführen zu können. Dieser Satellit weist hinsichtlich seiner Sonnensensoranordnung sowie der Ausrichtung der Meßachse seines einachsig messenden Drehgeschwindigkeitskreisels nicht mehr die eingangs genannten Einschränkungen auf, d.h. es liegt keine Rundumsicht der Sonnensensoranordnung in der vorwählbaren Ebene mehr vor,und die einzige Meßachse des Drehgeschwindigkeitskreisels kann beliebig orientiert sein. Wesentliches Merkmal ist, daß eine Schwungradvorrichtung hinzukommt, welche in der Lage ist, Drehimpulskomponenten um alle drei Koordinatenachsen zu erzeugen. Ein derartiger Satellit, welcher bei stark eingeschränktem Sonnensensor-Gesichtsfeld zur Drehgeschwindigkeitsmessung nur einen einachsig messenden Drehgeschwindigkeitskreisel aufweist, konnte bisher nicht konzipiert werden, da das stets auftretende bzw. in Rechnung zu stellende Problem einer erforderlich werdenden Sonnensuche aus einer unbekannten Anfangslage heraus bisher nur zu bewältigen war, wenn ein dreiachsig messender und besonders im Falle der redundanten Auslegung entsprechend teurer und anfälliger Drehgeschwindigkeitskreisel vorhanden war. Hiermit wird erstmals ein Satellit vorgestellt, welcher im Hinblick auf das essentielle Manöver der Sonnensuche mit einem einachsig messenden Drehgeschwindigkeitskreisel auskommt, und bei dem dieses Manöver mit Hilfe einer nunmehr vorhandenen Schwungradvorrichtung ermöglicht wird.

In den Unteransprüchen 10 bis 12 sind vorteilhafte Weiterbildungen dieses Satelliten im Hinblick auf die Ausbildung der Schwungradvorrichtung angegeben.

Im folgenden werden Ausführungsbeispiele der Erfindung anhand von Abbildungen näher erläutert.

In Fig. 1 sind die aus der WO 93/04923 bekannte Lage und Ausdehnung des dort geforderten Gesichtsfeldes der Sonnensensoranordnung sowie die zulässige Ausrichtung der Meßachse (Richtungsvektor $\underline{G}$) des einachsig messenden Kreisels im satellitenfesten Koordinatensystem XYZ dargestellt. Die Sonnensensoranordnung hat in der XZ-Ebene Rundumsicht ($0 \leq \alpha_1 \leq 2\pi$), und senkrecht dazu ist das Gesichtsfeld in beiden Richtungen auf $\pm\alpha_{2max}$ begrenzt, so daß um die positive und negative Y-Achse herum ein doppelkegelförmiger Bereich existiert, den die Sonnensensoranordnung nicht erfaßt. Für den Richtungsvektor $\underline{G}$ des Drehgeschwindigkeitskreisels sind lediglich die beiden schraffiert dargestellten Bereiche zugelassen, welche durch die Forderung charakterisiert sind:

$$|\beta| \geq (\pi/2) - \alpha_{2max} \qquad (1c)$$

$\beta$ stellt hier den Winkel zwischen der XZ-Ebene und dem Richtungsvektor $\underline{G}$ dar. Diese Forderung kann jedoch nicht immer eingehalten werden, und zwar aufgrund von Anforderungen, welche durch andere operationelle Manöver bedingt sind. In diesem Falle kann auch die in der WO 93/04923 angegebene Methode zur Sonnensuche nicht mehr zur Anwendung gebracht werden.

Dies gilt ebenso dann, wenn die Sonnensensoranordnung keine Rundumsicht mehr aufweist, wie etwa bei Ausfall eines einzelnen Sonnensensors, der bei einwandfreier Funktion einen Teil - bespielsweise 1/3 - des Rundum-Gesichtsfeldes abdeckt, oder wenn aus Kostengründen auf eine für die Rundumsicht ausreichende Anzahl von einzelnen Sonnensensoren verzichtet werden muß.

Eine Anordnung, bei der die o.g. Bedingungen verletzt sind, liegt beispielsweise dann vor, wenn das Sonnensensor-Gesichtsfeld etwa in der XZ-Ebene des satellitenfesten Koordinatensystems lediglich etwas mehr als den Winkel $\pi$ abdeckt und der Richtungsvektor $\underline{G}$ des einachsig messenden Drehgeschwindigkeitskreisels ebenfalls in der XZ-Ebene liegt, und zwar bevorzugt in der Mitte dieses Gesichtsfeldes. Eine derartige Anordnung ist schematisch in Fig. 2 dargestellt, in der das Gesichtsfeld in der XZ-Ebene durch Schraffur angedeutet und um den Richtungsvektor $\underline{G}$ der Meßachse des Drehgeschwindigkeitskreisels zentriert ist. Insbesondere kann der Richtungsvektor $\underline{G}$ auch mit der X-Achse zusammenfallen. Das Gesichtsfeld soll mindestens die beiden Vektoren $\pm\underline{e}_R$ enthalten, welche definiert sind durch:

$$\underline{e}_R = \tilde{G}\underline{e}_Y \qquad (3)$$

wobei $\underline{e}_Y$ der Einheitsvektor in Richtung der Y-Achse ist. Natürlich hat das so definierte Gesichtsfeld der Sonnensensoranordnung auch senkrecht zur XZ-Ebene eine gewisse Ausdehnung, beispielsweise von ± 30°, wobei sich diese Werte zum Rand hin etwas vermindern können.

Ein dreiachsenstabilisierter Satellit mit einer derartigen speziellen Anordnung des Sonnensensor-Gesichtsfeldes sowie der Meßachse des Drehgeschwindigkeitskreisels verfügt wie üblich zum Zwecke der Lageregelung über eine Drehmomenterzeugungsvorrichtung, welche im allgemeinen durch drei Paare von Lageregelungsdüsen gebildet ist, deren jedes positive und negative Drehmomente um eine der Koordinatenachsen erzeugen kann. Anstelle von Lageregelungsdüsen können auch andere Einrichtungen zur Drehmomenterzeugung, beispielsweise bei Vorhandensein eines äußeren Magnetfeldes ein System von Magnetspulen, vorhanden sein.

Gemäß der Erfindung ist nun vorgesehen, zusätzlich eine Drehimpulserzeugungsvorrichtung bereitzustellen, welche in der Lage ist, Drehimpulskomponenten in allen drei Koordinatenrichtungen zu erzeugen. Hierbei handelt es sich bevorzugt um eine Schwungradvorrichtung, welche im einfachsten Falle aus einem einzigen, in die jeweils gewünschte Richtung schwenkbaren Schwungrad besteht, jedoch im allgemeinen mindestens drei gesonderte Schwungräder aufweisen wird, deren Drehachsen nicht sämtlich in einer Ebene liegen dürfen. Durch geeignete Einstellung von Drehzahl und Drehrichtung dieser Schwungräder ist es dann möglich, einen resultierenden Drehimpuls (Drehimpulsvektor $\underline{H}$) des gewünschten Betrages und der gewünschten Richtung zu erzeugen. Eine bevorzugte Ausführungsform einer derartigen Schwungradvorrichtung ist in Fig. 3 wiedergegeben, in welcher zwei Reaktionsräder RWX und RWZ, deren Drehachsen jeweils mit der X- und der Z-Achse zusammenfallen, sowie zwei Dallräder FMW1 und FMW2, deren Drehachsen mit der negativen Y-Achse jeweils denselben Winkel $\vartheta$, aber mit entgegengesetztem Vorzeichen, einschließen und mit der genannten Achse koplanar sind. Die entsprechende Ebene bildet mit der negativen X-Achse den Winkel $\eta$. Typische Zahlenwerte für diese Winkel sind:

$$\eta = 45°$$

$$\vartheta = 10°$$

Eine derartige Anordnung von Schwungrädern kann unabhängig von den Koordinatenachsen auch folgendermaßen definiert werden: Es sind zwei Drallräder mit einen spitzen Winkel einschließenden Drehachsen sowie zwei bezüglich ihrer Drehachsen orthogonal zueinander angeordnete Reaktionsräder vorhanden, die beiden von den zwei Drehachsen aufgespannten Drehachsenebenen stehen senkrecht aufeinander und die Winkethalbierenden der von den zwei Radpaaren jeweils aufgespannten Winkel liegen in einer orthogonal zu den beiden Drehachsenebenen orientierten Ebene. Drallräder sind im allgemeinen dazu ausgelegt, hohe Drehimpulse in einer Richtung bereitzustellen und in etwa beizubehalten, während Reaktionsräder relativ kleine Drehimpulse in beiden Drehrichtungen erzeugen können. Die Schwungradvorrichtung der Fig. 3 ist bevorzugt dazu ausgelegt, einen Drehimpulsvektor $\underline{H}$ in Richtung der negativen Y-Achse bereitzustellen, wobei gewisse Abweichungen in den beiden anderen Koordinatenrichtungen leicht einstellbar sind. Sie ist redundant ausgelegt, so daß es auch bei Ausfall eines beliebigen der vier Schwungräder noch möglich ist, einen Drehimpulsvektor $\underline{H}$ etwa in Richtung der negativen Y-Achse, aber auch in einer beliebigen anderen Richtung zu erzeugen.

Zur Durchführung der Sonnensuche mit einer derartigen Sensoranordnung kann die Drehgeschwindigkeit zunächst in bekannter Weise gesteuert gedämpft werden, wenn sie mit einer gewissen Genauigkeit bekannt ist. Dies ist z.B. nach der Separation des Satelliten von der Trägerrakete der Fall. Hierzu wird mit Hilfe der oben erwähnten Drehmomenterzeugungseinrichtung, also beispielsweise der Lageregelungsdüsen, ein entgegengesetzt zum Drehgeschwindigkeitsvektor $\underline{\omega}$ orientiertes Drehmoment $\underline{\tau}$ aufgebracht, welches für die folgende Zeitdauer $\Delta t$ einwirkt:

$$\Delta t = |I\underline{\omega}|/|\underline{\tau}| \qquad (4)$$

wobei I der Trägheitstensor des Satelliten ist. Während dieses Vorganges sind die Schwungräder der Schwungradanordnung in Ruhe. Hiernach wird im allgemeinen eine kleine unbekannte Restdrehgeschwindigkeit $\underline{\omega}_R$ zurückbleiben, welche im nachfolgenden Schritt abgebaut wird.

An diesem Punkt setzt die Erfindung ein, welche jedoch auch ohne den zuvor geschilderten Verfahrensschritt anwendbar ist. Es wird mit Hilfe der Schwungradvorrichtung ein konstanter Drehimpulsvektor $\underline{H}$ eingestellt, von dem zunächst nur verlangt werden muß, daß er nicht parallel zum Richtungsvektor $\underline{G}$ der Meßachse des Drehgeschwindigkeitskreisels orientiert ist. Wie bereits erwähnt, ist noch ein Regler erforderlich, welcher auf der Basis der Meßsignale des Drehgeschwindigkeitskreisels zum Zwecke der Erzeugung von Regelmomenten Stellsignale für die Drehmomenterzeugungsvorrichtung abgibt, wie er in der Lageregelungsvorrichtung eines jeden Satelliten vorhanden ist. Demnach ergibt sich eine Systemgleichung, welche (unter Vernachlässigung des Euler-Terms) lautet:

$$I\dot{\underline{\omega}} = (\tilde{\underline{H}} - k\underline{G}\underline{G}^T)\underline{\omega} \qquad (5)$$

wobei $\tilde{H}$ die Kreuzproduktmatrix des Drehimpulsvektors $\underline{H}$, k ein Verstärkungsfaktor $\underline{G}^T$ der zu $\underline{G}$ transponierte Vektor und $\dot{\underline{\omega}}$ die zeitliche Ableitung des Drehgeschwindigkeitsvektors $\underline{\omega}$ sind. Der zweite Term auf der rechten Seite dieser Gleichung entspricht dem bereits aus der WO 93/04923 A1 bekannten Regelgesetz, welches die zum Richtungsvektor $\underline{G}$ parallele Komponente des Drehgeschwindigkeitsvektors $\underline{\omega}$ auf Null dämpft. Der erste, vom Drehimpulsvektor $\underline{H}$ abhängige Term verursacht eine Verkopplung der zu $\underline{H}$ senkrecht orientierten Drehgeschwindigkeitskomponente mit der Meßachse $\underline{G}$. Dabei wird der Drehung um die senkrecht zum Richtungsvektor $\underline{G}$ und senkrecht zum Drehimpulsvektor $\underline{H}$ orientierte Komponente des Drehgeschwindigkeitsvektors $\underline{\omega}$ ständig Rotationsenergie entzogen und in die Richtungsachse eingekoppelt, wo sie dann der Dämpfung durch den zweiten Term unterliegt. Dies geschieht mit Hilfe des Lageregelungssystems beispielsweise durch Betätigung der Lageregelungsdüsen, mit deren Hilfe das Regelmoment $\underline{\tau}$ erzeugt wird.

Eine optimale Dämpfung der senkrecht zum Richtungsvektor $\underline{G}$ orientierten Komponente des Drehgeschwindigkeitsvektors $\omega$ gelingt dann, wenn der Drehimpulsvektor $\underline{H}$ senkrecht zu $\underline{G}$ eingestellt wird. Dann verbleibt als Ergebnis des Regelungsvorganges lediglich eine kleine Drehung um $\underline{H}$, welche jedoch auch Null sein kann.

Allgemein läßt sich die obige Systemgleichung mit Hilfe einer Systemmatrix A auch folgendermaßen formulieren:

$$\dot{\underline{\omega}}=A\underline{\omega}. \qquad (5a)$$

Die Wahl der Vektoren $\underline{H}$ und $\underline{G}$ bestimmt die Eigenwerte der Systemmatrix A und somit das Dämpfungsverhalten. Werden diese Vektoren in Abweichung von der Vorschrift, wonach $\underline{G}$ und $\underline{H}$ senkrecht aufeinanderstehen sollen, gewählt, so werden zwar die Drehgeschwindigkeitskomponenten um alle drei Koordinatenachsen zu Null geregelt, jedoch mit stark oszillatorischem Einschwingverhalten, was normalerweise unerwünscht ist.

Der praktisch besonders relevante Fall, wie er auch in Fig. 2 dargestellt ist, liegt eben darin, daß $\underline{G}$ und $\underline{H}$ in der XZ-Ebene liegen und senkrecht zueinander orientiert sind. Mit dieser Konfiguration werden die Drehgeschwindigkeitskomponenten entlang der Richtungsachse $\underline{G}$ sowie der Y-Achse des satellitenfesten Koordinatensystems vollständig gedämpft, so daß lediglich eine Rotation um den Drehimpulsvektor $\underline{H}$ verbleibt, wie oben bereits erwähnt.

Falls der Drehimpulsvektor $\underline{H}$ so orientiert ist wie in Fig. 2 gezeigt, nämlich am Rande des Gesichtfeldes der Sonnensensoranordnung, welches insgesamt mindestens den Winkel $\pi$ abdeckt und auch den Vektor -$\underline{H}$ einschließt, so wird eine Restdrehung des Satelliten um $\underline{H}$ früher oder später mit Sicherheit zum Sonneneinfang führen. Ist diese Restgeschwindigkeit jedoch sehr klein oder gar Null, so kann noch ein Suchmanöver gestartet werden, welches darin besteht, daß durch Betätigung der Drehmomenterzeugungsvorrichtung, also beispielsweise der Lageregelungsdüsen, eine Rotation um eine Achse $\underline{e}_R$ in Gang gesetzt wird, welche in der XZ-Ebene innerhalb des Gesichtsfeldes der Sonnensensoranordnung liegt, und zwar so weit am Rande, daß dies auch noch für den Vektor -$\underline{e}_R$ gilt. Als bevorzugte Achse kann $\underline{e}_R$ = H gewählt werden. Dies stellt den verbrauchsoptimalen Fall dar. Die zeitliche Dauer der erforderlichen Drehmomentimpulse wird anhand der Restgeschwindigkeit abgeschätzt, welche nach der geregelten Dämpfung unter Anwendung des obigen Regelgesetzes zurückbleibt.

Für den Fall, daß das Gesichtsfeld der Sonnensensoranordnung in der XZ-Ebene aus einem oder mehreren, durch Lücken voneiander getrennten Teilsektoren besteht, von denen keiner einen zusammenhängenden Winkelbereich von mindestens $\pi$ abdeckt, ist nach Durchführung des erfindungsgemäßen Verfahrensschrittes, d.h. der geregelten Dämpfung unter Anwendung des obigen Regelgesetzes, ein andersgeartetes abschließendes Suchmanöver anzuwenden. Dieses besteht darin, daß unter Berücksichtigung der Orientierung und Größe der Teilsektoren eine Drehung des Satelliten um eine Drehachse oder sukzessive Drehungen um mehrere Drehachsen kommandiert wird bzw. werden, deren Ausrichtung sicherstellt, daß die Sonne schließlich in einem der Teilsektoren auftaucht. Derartige Manöver sind beispielsweise aus der DE 27 49 868 C3 oder dem Artikel „The Attitude and Orbit Control Subsystem of the TV-SAT/TDF1 Spacecraft" von H. Bittner et al., IFAC-Symposium on Automatic Control in Space, 1982, Seiten 83 bis 102, bekannt. Bei dem dortigen Verfahren ist jedoch ein dreiachsig messender Drehgeschwindigkeitskreisel bzw. eine äquivalente Meßvorrichtung vorausgesetzt. Um der Tatsache Rechnung zu tragen, daß im vorliegenden Fall nur ein einachsig messender Drehgeschwindigkeitskreisel vorhanden ist, wird zur Schätzung der unbekannten Komponente des Drehgeschwindigkeitsvektors $\underline{\omega}$, welche senkrecht zum Richtungsvektor $\underline{G}$ der Meßachse orientiert ist, ein Beobachter verwendet. Dieser kann beispielsweise die in Fig. 4 wiedergegebene Struktur aufweisen.

Die Dynamik des realen Satelliten ist in dem gestrichelten Kasten 1 dargestellt und bildet die Gleichung

$$\dot{\underline{\omega}} = I^{-1}\tilde{\underline{H}}\underline{\omega} + I^{-1}\underline{\tau} \qquad (6)$$

ab, wobei $\underline{\tau}$ das dem Satelliten zugeführte Regelmoment darstellt. Durch den einachsig messenden Drehgeschwindigkeitskreisel 2 wird eine Ausgangsgröße y gemessen, welche proportional zu der zum Richtungsvektor $\underline{G}$ der Meßachse des Drehgeschwindigkeitskreisels senkrechten Drehgeschwindigkeitskomponente ist:

$$y \sim \underline{G}^T\underline{\omega} \qquad (7)$$

Sowohl ein dem Regelmoment $\underline{\tau}$ entsprechendes Signal als auch das Ausgangssignal y werden dem Beobachter 3 zugeführt, welcher die Satellitendynamik detailliert nachbildet. Der Beobachter erzeugt ein Signal $\hat{y}$, von welchem in einer Summationsstelle 6 das Ausgangssignal y des realen Satelliten subtrahiert wird. Im Beobachter werden noch als Zwischenwerte die Schätzgrößen $\hat{\underline{\omega}}$ sowie deren zeitliche Ableitung gebildet. Die Größe s stellt in üblicher Weise den Laplace- bzw. Differentialoperator dar. Weiterhin findet die Trägheitsmatrix I des Satelliten Verwendung. Der Beobachter 3 kann in der abgebildeten Anordnung in hardwaremäßiger Verschaltung oder als reiner Algorithmus im Bordrechner des Satelliten verwirklicht sein. Die in der Summierstelle 6 gebildete Differenzgröße kann wahlweise noch einen Verstärker 7 durchlaufen, in welchem ein vektorieller Verstärkungsfaktor $\underline{l}$ mit $\underline{l}^T$= ($l_1$, $l_2$, $l_3$) zur Anwendung kommt. Die im Beobachter gebildete Schätzgröße $\hat{\underline{\omega}}$, welche drei geschätzte Komponenten in allen drei Koordinatenrichtungen enthält, wird einem Regler 4 zugeführt, welcher Stellsignale für eine nachfolgende Drehmomenterzeugungsvorrichtung 5 derart erzeugt, daß das folgende Regelgesetz verwirklicht wird:

$$\underline{\tau}=k_D(\underline{\omega}_R-\hat{\underline{\omega}}) \qquad (8)$$

Die Regelung bewirkt also, daß die Schätzgröße $\hat{\underline{\omega}}$ dem Referenzvektor $\underline{\omega}_R$ nachgeführt wird, wobei $\underline{\omega}_R$ der Vektor für die bei der Sonnensuche anzustrebende Drehgeschwindigkeit ist. Dieser Vektor muß unter Beachtung von Größe und Orientierung der Gesichtsfelder der einzelnen Sonnensensoren so festgelegt und ggf. in mehreren aufeinanderfolgenden Schritten immer wieder geändert werden, daß die Sonne schließlich mit Sicherheit in einem der Teilsektoren auftaucht.

Zu beachten ist hierbei, daß auch während dieses abschließenden Suchmanövers mittels der erfindungsgemäßen Schwungradvorrichtung ein Drehimpulsvektor $\underline{H}$ aufzubringen ist, welcher nunmehr so orientiert sein muß, daß die dem Beobachter zugeordnete Beobachtbarkeitsmatrix $Q_B$ den Rang 3 hat. Diese Matrix ist bekanntlich gegeben durch:

$$Q_B = \begin{bmatrix} \underline{G}^T \\ \underline{G}^T I^{-1} \tilde{H} \\ \underline{G}^T (I^{-1} \tilde{H})^2 \end{bmatrix} \qquad (9)$$

Beobachtbarkeit liegt vor, sobald die drei Zeilenvektoren dieser Matrix linear unabhängig voneinander sind. Dies kann durch Einstellen des Drehimpulsvektors $\underline{H}$ derart erreicht werden, daß zwischen $\underline{H}$ und $\underline{G}$ ein Winkel von 45° aufgespannt wird. Hierdurch werden alle drei Bewegungsachsen miteinander verkoppelt.

Voraussetzung für die Anwendung dieses Suchverfahrens ist, daß sich der Satellit nach Abschluß der geregelten Dämpfung nur noch mit einer Geschwindigkeit dreht, die so klein ist, daß die folgende Ungleichung erfüllt ist:

$$|I\underline{\omega}| << |\underline{H}| \qquad (10)$$

Dann ist der nichtlineare Einfluß des Euler-Terms $\tilde{\omega}\, I\underline{\omega}$ in der folgenden Bewegungsgleichung vernachlässigbar:

$$I\dot{\underline{\omega}} + \tilde{\omega}(I\underline{\omega}+\underline{H})=\underline{\tau} \qquad (11)$$

und es resultiert die oben erwähnte Beobachtergleichung. Diese Voraussetzung ist jedoch nach Abschluß der erfindungsgemäßen geregelten Dämpfung stets gegeben. Im Falle kugelförmiger Massenverteilung im Satelliten verschwindet der Euler-Terms $\tilde{\omega}\, I\underline{\omega}$ sogar bei betragsmäßig großen Drehgeschwindigkeiten $|\underline{\omega}|$.

Fig. 5 zeigt schließlich in zusammenfassender Darstellung die einzelnen Teilschritte der Suchstrategie zur Sonnensuche gemäß der Erfindung.

### Patentansprüche

1. Verfahren zur Sonnensuche für einen dreiachsenstabilisierten Satelliten, welcher mit einer Sonnensensorvorrichtung, deren Gesichtsfeld einen oder mehrere, durch Lücken voneinander getrennte Teilsektoren einer vorwählbaren Ebene eines satellitenfesten, orthogonalen, dreiachsigen Koordinatensystems und einen gewissen Bereich senkrecht zu dieser Ebene abdeckt, einem einachsig messenden Drehgeschwindigkeitskreisel mit beliebig orientierter Meßachse, einer Drehmomenterzeugungsvorrichtung, welche keine Schwungradvorrichtung ist, zur Erzeugung von Drehmomenten um alle drei Koordinatenachsen sowie einem auf der Basis der Meßsignale des Drehgeschwindigkeitskreisels zum Zwecke der Erzeugung von Regelmomenten Stellsignale für die Drehmomenterzeugungsvorrichtung abgebenden Regler ausgestattet ist, wobei ein Regelgesetz folgender Form zur Anwendung kommt: $\underline{\tau} = -k\underline{G}\underline{G}^T\underline{\omega}$, und wobei $\underline{\tau}$ das Regelmoment, k ein Verstärkungsfaktor $\underline{G}$ der Richtungsvektor der Meßachse mit $|\underline{G}| = 1$, $\underline{G}^T$ der zu $\underline{G}$ transponierte Vektor und $\underline{\omega}$ der Drehgeschwindigkeitsvektor des Satelliten sind, **dadurch gekennzeichnet,** daß mit Hilfe einer zusätzlich zu verwendenden Schwungradvorrichtung ein Drehimpuls (Drehimpulsvektor $\underline{H}$) erzeugt wird, welcher nicht parallel zur Richtung der Meßachse ist.

2. Verfahren nach Anspruch 1, unter Verwendung einer Sonnensensorvorrichtung, deren Gesichtsfeld innerhalb der vorwählbaren Ebene einen Winkelbereich von mindestens $\pi$ lückenlos abdeckt, **dadurch gekennzeichnet,** daß der Drehimpulsvektor $\underline{H}$ senkrecht zum Richtungsvektor $\underline{G}$ der Meßachse orientiert ist

3. Verfahren nach Anspruch 2, **dadurch gekennzeichnet,** daß die Orientierung des Drehimpulsvektors $\underline{H}$ so eingestellt wird, daß sowohl $\underline{H}$ als auch -$\underline{H}$, ausgehend vom Koordinatenursprung des satellitenfesten Koordinatensystems, innerhalb des Gesichtsfeldes der Sonnensensoranordnung liegen.

4. Verfahren nach Anspruch 3, **dadurch gekennzeichnet,** daß falls nach Anwendung des Regelgesetzes keine oder nur eine kleine Drehung des Satelliten um die Richtung des Drehimpulsvektors $\underline{H}$ verbleibt, eine Rotation um einen Vektor $\underline{e}_R$ kommandiert wird, der in der vorwählbaren Ebene ebenso wie der Vektor -$\underline{e}_R$ innerhalb des Gesichtsfeldes der Sonnensensoranordnung liegt.

5. Verfahren nach Anspruch 4, **dadurch gekennzeichnet,** daß der Vektor $\underline{e}_R$ mit dem Drehimpulsvektor $\underline{H}$ kollinear ist.

6. Verfahren nach Anspruch 1, unter Verwendung einer Sonnensensorvorrichtung, deren Gesichtsfeld innerhalb der vorwählbaren Ebene keinen einen Winkelbereich von mindestens $\pi$ lückenlos abdeckenden Teilsektor aufweist, **dadurch gekennzeichnet,** daß der Drehimpulsvektor $\underline{H}$ so orientiert wird, daß die Matrix

$$Q_B = \begin{bmatrix} \underline{G}^T \\ \underline{G}^T I^{-1} \tilde{H} \\ \underline{G}^T (I^{-1} \tilde{H})^2 \end{bmatrix}$$

den Rang 3 hat.

7. Verfahren nach Anspruch 6, **dadurch gekennzeichnet,** daß der Drehimpulsvektor $\underline{H}$ mit der Meßachse $\underline{G}$ einen Winkel von 45° einschließt.

8. Verfahren nach Anspruch 6 oder 7, **dadurch gekennzeichnet,** daß unter Berücksichtigung der Orientierung und Größe der Teilsektoren des Gesichtsfeldes der Sonnensensoranordnung eine Drehung oder sukzessive Drehungen des Satelliten um eine oder mehrere Drehachsen kommandiert wird bzw. werden, deren Ausrichtung sicherstellt, daß die Sonne schließlich in einem der Teilsektoren auftauchen wird, wobei zur Schätzung der unbekannten Komponente(n) des Drehgeschwindigkeitsvektors $\underline{\omega}$, welche senkrecht zur Meßachse orientiert ist (sind), ein Beobachter verwendet wird.

9. Dreiachsenstabilisierter Satellit, welcher mit einer Sonnensensoranordnung, deren Gesichtsfeld innerhalb einer in einem satellitenfesten, dreiachsigen, orthogonalen Koordinatensystem vorwählbaren Ebene einen oder mehrere, durch Lücken voneinander getrennte Teilsektoren abdeckt, einem einachsig messenden Drehgeschwindigkeitskreisel mit beliebig orientierter Meßachse (Richtungsvektor $\underline{G}$ mit $|\underline{G}| = 1$), einer um alle drei Achsen Drehmomente erzeugenden Drehmomenterzeugungsvorrichtung und einem auf der Basis der Meßsignale des Drehgeschwindigkeitskreisels Stellsignale für die Drehmomenterzeugungsvorrichtung liefernden Regler ausgestattet ist, **dadurch gekennzeichnet,** daß zusätzlich eine Schwungradvorrichtung vorhanden ist, welche in der Lage ist, Drehimpulskomponenten um alle drei Koordinatenachsen zu erzeugen.

10. Satellit nach Anspruch 9, **dadurch gekennzeichnet,** daß die Schwungradvorrichtung mindestens drei Schwungräder mit nicht sämtlich in einer Ebene liegenden Drehachsen aufweist.

11. Satellit nach Anspruch 10, **dadurch gekennzeichnet,** daß mindestens je ein Reaktionsrad und ein Drallrad vorhanden sind.

12. Satellit nach Anspruch 11, **dadurch gekennzeichnet,** daß zwei Drallräder mit einen spitzen Winkel einschließenden Drehachsen sowie zwei bezüglich ihrer Drehachsen orthogonal zueinander angeordnete Reaktionsräder vorhanden sind, die beiden von den jeweils zwei Drehachsen aufgespannten Drehachsenebenen senkrecht aufeinanderstehen und die Winkelhalbierenden der von den zwei Radpaaren jeweils aufgespannten Winkel in einer orthogonal zu den beiden Drehachsenebenen orientierten Ebene liegen.

## Claims

1. Method for sun-seeking for a triaxially stabilised satellite provided with a sun-sensor device, the visual field of which covers one or more partial sectors of a preselectable plane of a satellite-fixed, orthogonal, triaxial system of coordinates, which partial sectors are separated from each other by gaps, and a certain area perpendicular to this plane, a uniaxially-measuring rotational-speed gyroscope having a randomly oriented measurement axis, a torque-generating device, which is not a flywheel device, for generating torques about all three coordinate axes, and a controller which, on the basis of the measurement signals of the rotational-speed gyroscope, for the purpose of generating control torques, outputs actuating signals for the torque-generating device, wherein a control law having the following form is used: $\underline{\tau} = -k\underline{GG}^T\underline{\omega}$, where $\underline{\tau}$ is the control torque, k an amplification factor $\underline{G}$ the directional vector of the measurement axis with $|G| = 1$, $\underline{G}^T$ the vector transposed to $\underline{G}$, and $\underline{\omega}$ the rotational-speed vector of the satellite, **characterised in that** there is generated with the aid of a flywheel device, which is to be used additionally, an angular momentum (angular momentum vector $\underline{H}$) which is not parallel to the direction of the measurement axis.

2. Method according to claim 1, involving the use of a sun-sensor device, the visual field of which, within the preselectable plane, covers without gaps an angular range of at least $\pi$, **characterised in that** the angular momentum vector $\underline{H}$ is oriented so as to be perpendicular to the directional vector $\underline{G}$ of the measurement axis.

3. Method according to claim 2, **characterised in that** the orientation of the angular momentum vector $\underline{H}$ is adjusted in such a way that both $\underline{H}$ and $-\underline{H}$, starting from the origin of the satellite-fixed system of coordinates, lie within the visual field of the sun-sensor arrangement.

4. Method according to claim 3, **characterised in that** if no rotation, or only a small rotation, of the satellite about the direction of the angular momentum vector

$\underline{H}$ remains after use of the control law, a rotation about a vector $\underline{e}_R$ is commanded, which vector lies in the preselectable plane, as does the vector $-\underline{e}_R$, within the visual field of the sun-sensor arrangement.

5. Method according to claim 4, **characterised in that** the vector $\underline{e}_R$ is collinear with the angular momentum vector $\underline{H}$.

6. Method according to claim 1, involving the use of a sun-sensor device, the visual field of which, within the preselectable plane, does not have a partial sector which covers without gaps an angular range of at least $\pi$, **characterised in that** the angular momentum vector $\underline{H}$ is oriented in such a way that the matrix

$$Q_B = \begin{bmatrix} \underline{G}^T \\ \underline{G}^T I^{-1} \tilde{H} \\ \underline{G}^T (I^{-1} \tilde{H})^2 \end{bmatrix}$$

is of order 3.

7. Method according to claim 6, **characterised in that** the angular momentum vector $\underline{H}$ together with the measurement axis $\underline{G}$ encloses an angle of 45°.

8. Method according to claim 6 or 7, **characterised in that** taking into account the orientation and size of the partial sectors of the visual field of the sun-sensor arrangement, a rotation or successive rotations of the satellite about one or more rotational axes is/are ordered, the alignment of which ensures that the sun will finally appear in one of the partial sectors, wherein in order to estimate the unknown component(s) of the rotational-speed vector $\underline{\omega}$, which component(s) is (are) oriented so as to be perpendicular to the measurement axis, an observer is used.

9. Triaxially stabilised satellite which is provided with a sun-sensor arrangement, the visual field of which, within a preselectable plane in a satellite-fixed, triaxial, orthogonal system of coordinates, covers one or more partial sectors, which are separated from each other by gaps, a uniaxially-measuring rotational-speed gyroscope having a randomly oriented measurement axis (directional vector $\underline{G}$ with $|G| = 1$), a torque-generating device, which generates torques about all three axes, and a controller which, on the basis of the measurement signals of the rotational-speed gyroscope, delivers actuating signals for the torque-generating device, **characterised in that** there is additionally present a flywheel device which is able to generate angular momentum components about all three coordinate axes.

10. Satellite according to claim 9, **characterised in that** the flywheel device has at least three flywheels with rotational axes which do not all lie in one plane.

11. Satellite according to claim 10, **characterised in that** there are at least one reaction wheel and one spin wheel.

12. Satellite according to claim 11, **characterised in that** there are two spin wheels with rotational axes which enclose an acute angle, and two reaction wheels which are arranged orthogonally with respect to each other in terms of their rotational axes, the two rotational-axis planes defined by each pair of rotational axes are perpendicular with respect to each other, and the median lines of the angles defined by the two pairs of wheels in each case lie in a plane which is oriented orthogonally with respect to the two rotational-axis planes.

**Revendications**

1. Procédé d'acquisition du soleil destiné à un satellite stabilisé sur trois axes équipé d'un dispositif à capteurs solaires, dont le champ visuel couvre un ou plusieurs secteurs partiels séparés les uns des autres par des lacunes d'un plan pouvant être présélectionné d'un système de coordonnées orthogonales à trois axes fixe du satellite, et une certaine zone perpendiculaire à ce plan, d'un gyroscope à vitesse de rotation mesurant suivant un axe avec un axe de mesure orienté de façon quelconque, d'un dispositif de génération de couples de rotation qui n'est pas un dispositif à volants, et qui est destiné à générer des couples de rotations autour de l'ensemble des trois axes de coordonnées, ainsi que d'un régulateur qui, sur la base des signaux de mesure du gyroscope à vitesse de rotation, délivre des signaux de réglage au dispositif de génération de couples de rotation dans le but de générer des moments de régulation, une loi de régulation de la forme suivante étant appliquée : $\underline{\tau} = -k\underline{G}\underline{G}^T\underline{\omega}$, $\tau$ étant le moment de régulation, k un facteur d'amplification, $\underline{G}$ le vecteur de direction de l'axe de mesure avec $|\underline{G}| = 1$, $\underline{G}^T$ le vecteur transposé vers $\underline{G}$, et $\underline{\omega}$ le vecteur de vitesse de rotation du satellite, **caractérisé en ce qu**'une impulsion de rotation (vecteur $\underline{H}$ d'impulsion de rotation) est générée à l'aide d'un dispositif supplémentaire à volants à utiliser, lequel n'est pas parallèle à la direction de l'axe de mesure.

2. Procédé selon la revendication 1, avec utilisation d'un dispositif à capteurs solaires dont le champ visuel couvre sans lacunes une zone angulaire d'au moins $\pi$ dans le plan pouvant être présélectionné, **caractérisé en ce que** le vecteur H d'impulsion de rotation est orienté perpendiculairement au vecteur de direction G de l'axe de mesure.

3. Procédé selon la revendication 2, **caractérisé en ce que** l'orientation du vecteur H d'impulsion de rotation est réglée de telle' sorte qu'en partant des coordonnées initiales du système de coordonnées fixe du satellite, aussi bien H que -H soient situés dans le champ visuel du dispositif à capteurs solaires.

4. Procédé selon la revendication 3, **caractérisé en ce que**, dans le cas où après l'application de la loi de régulation il ne subsiste pas de rotation ou qu'une faible rotation du satellite autour de la direction du vecteur H d'impulsion de rotation, une rotation est commandée autour d'un vecteur $\underline{e}_R$ qui est situé dans le plan pouvant être présélectionné, de même que le vecteur - $\underline{e}_R$ est situé dans le champ visuel du dispositif à capteurs solaires.

5. Procédé selon la revendication 4, **caractérisé en ce que** le vecteur $\underline{e}_R$ est colinéaire avec le vecteur H d'impulsion de rotation.

6. Procédé selon la revendication 1, avec utilisation d'un dispositif à capteurs solaires dont le champ visuel ne comporte pas de secteur partiel couvrant sans lacunes une zone angulaire d'au moins π dans le plan pouvant être présélectionné, **caractérisé en ce que** le vecteur H d'impulsion de rotation est orienté de telle sorte que la matrice

$$Q_B = \begin{bmatrix} \underline{G}^T \\ \underline{G}^T I^{-1}\tilde{H} \\ \underline{G}^T (I^{-1}\tilde{H})^2 \end{bmatrix}$$

ait le rang 3.

7. Procédé selon la revendication 6, **caractérisé en ce que** le vecteur H d'impulsion de rotation inclut avec l'axe de mesure G un angle de 45°.

8. Procédé selon la revendication 6 ou 7, **caractérisé en ce que**, compte tenu de l'orientation et de l'importance des secteurs partiels du champ visuel du dispositif à capteurs solaires, on commande une rotation ou des rotations successives du satellite autour d'un ou de plusieurs axes de rotation, dont l'orientation assure que le soleil apparaîtra finalement dans l'un des secteurs partiels, un observateur étant utilisé pour l'estimation de la (des) composante(s) inconnue(s) du vector $\underline{\omega}$ de vitesse de rotation qui est (sont) orientée(s) perpendiculairement à l'axe de mesure.

9. Satellite stabilisé sur trois axes équipé d'un dispositif à capteurs solaires, dont le champ visuel couvre un ou plusieurs secteurs partiels séparés les uns des autres par des lacunes d'un plan pouvant être présélectionné d'un système de coordonnées orthogonales à trois axes fixe du satellite, d'un gyroscope à vitesse de rotation mesurant suivant un axe avec un axe de mesure orienté de façon quelconque (vecteur de direction G, avec |G| = 1), d'un dispositif de génération de couples de rotation générant des couples de rotation autour de l'ensemble des trois axes, et d'un régulateur qui, sur la base des signaux de mesure du gyroscope à vitesse de rotation, délivre des signaux de réglage au dispositif de génération de couples de rotation, **caractérisé en ce qu**'il est prévu un dispositif supplémentaire à volants qui est en mesure de générer des composantes d'impulsions de rotation autour de l'ensemble des trois axes de coordonnées.

10. Satellite selon la revendication 9, **caractérisé en ce que** le dispositif à volants comporte au moins trois volants dont les axes de rotation ne sont pas tous situés dans le même plan.

11. Satellite selon la revendication 10, **caractérisé en ce qu**'il est prévu au moins un volant de réaction et au moins un volant de giration.

12. Satellite selon la revendication 11, **caractérisé en ce qu**'il est prévu deux volants de giration dont les axes de rotation incluent un angle aigu, ainsi que deux volants de réaction disposés orthogonalement l'un par rapport à l'autre en ce qui concerne leurs axes de rotation, que les deux plans d'axes de rotation respectivement projetés par les deux axes de rotation sont superposés perpendiculairement, et que les bissectrices des angles projetés par les deux couples de volants sont respectivement situées dans un plan orienté orthogonalement par rapport aux deux plans d'axes de rotation.

Fig.1

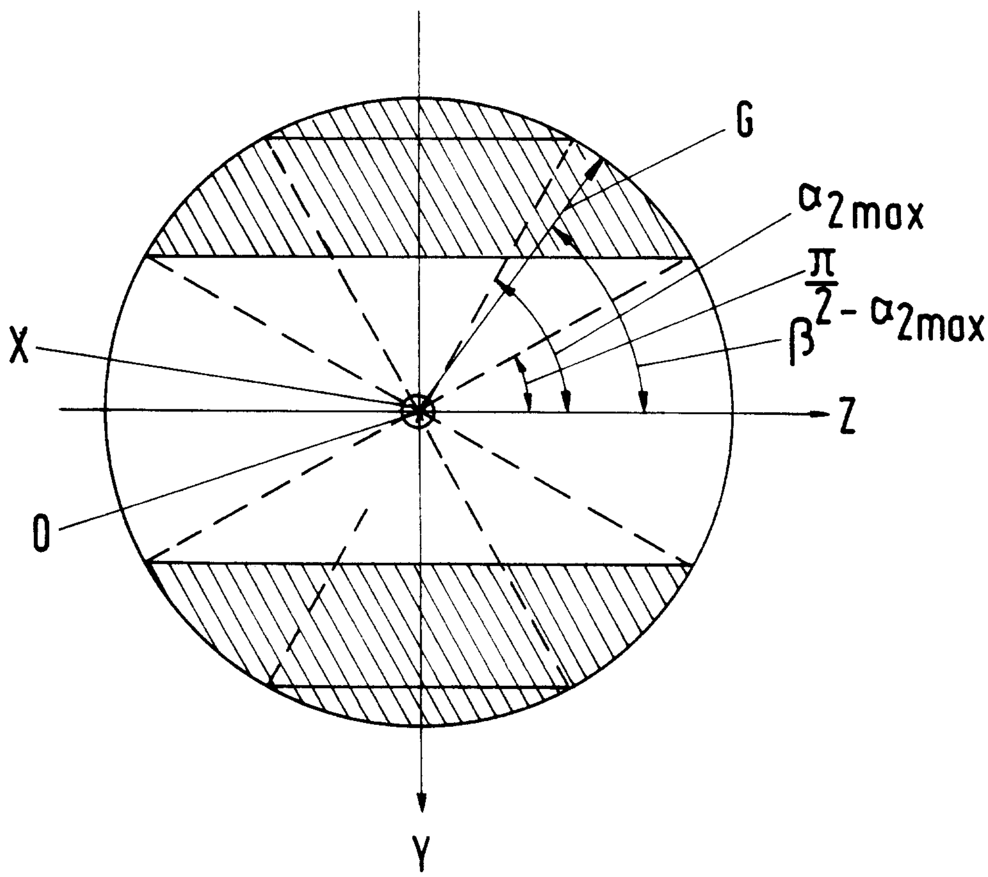

Fig.2

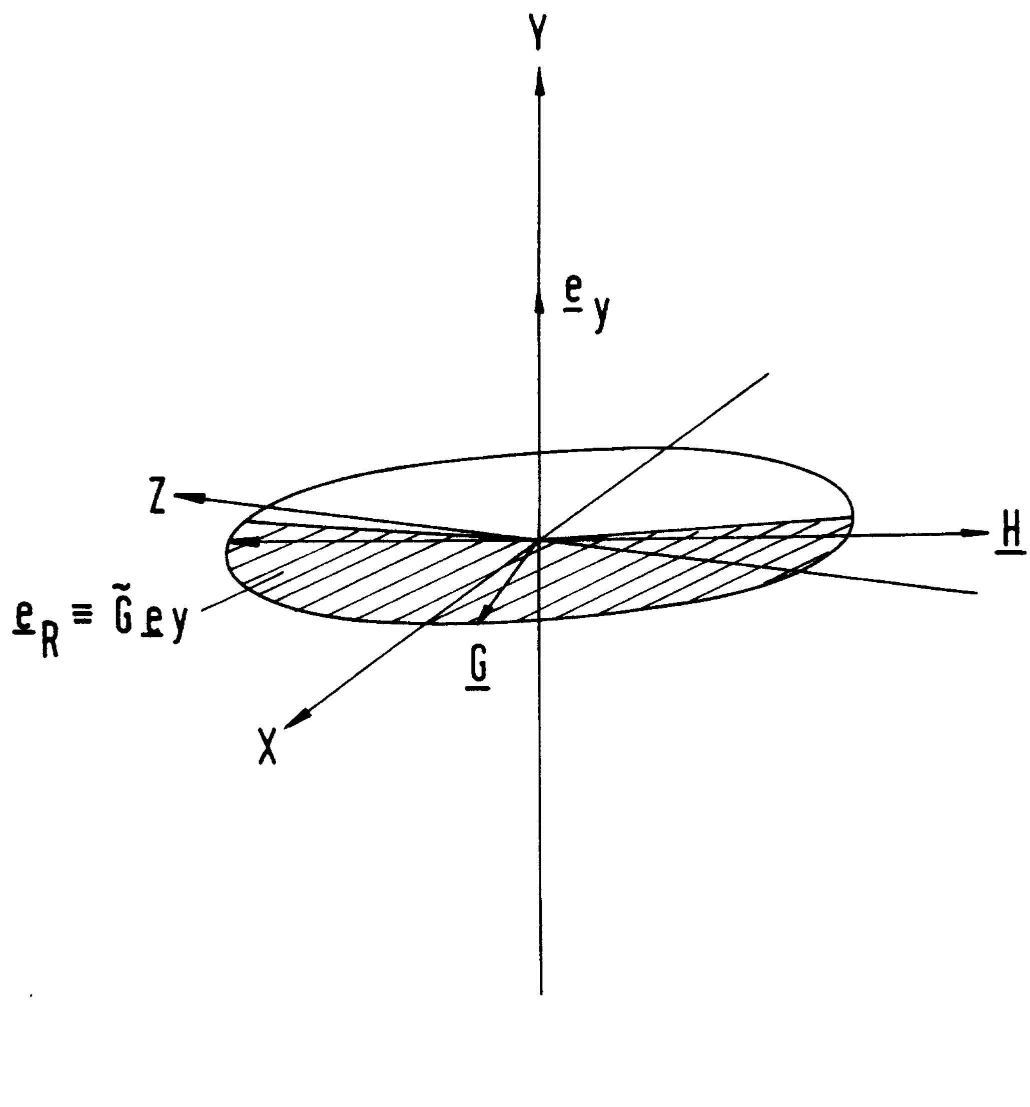

Fig.3

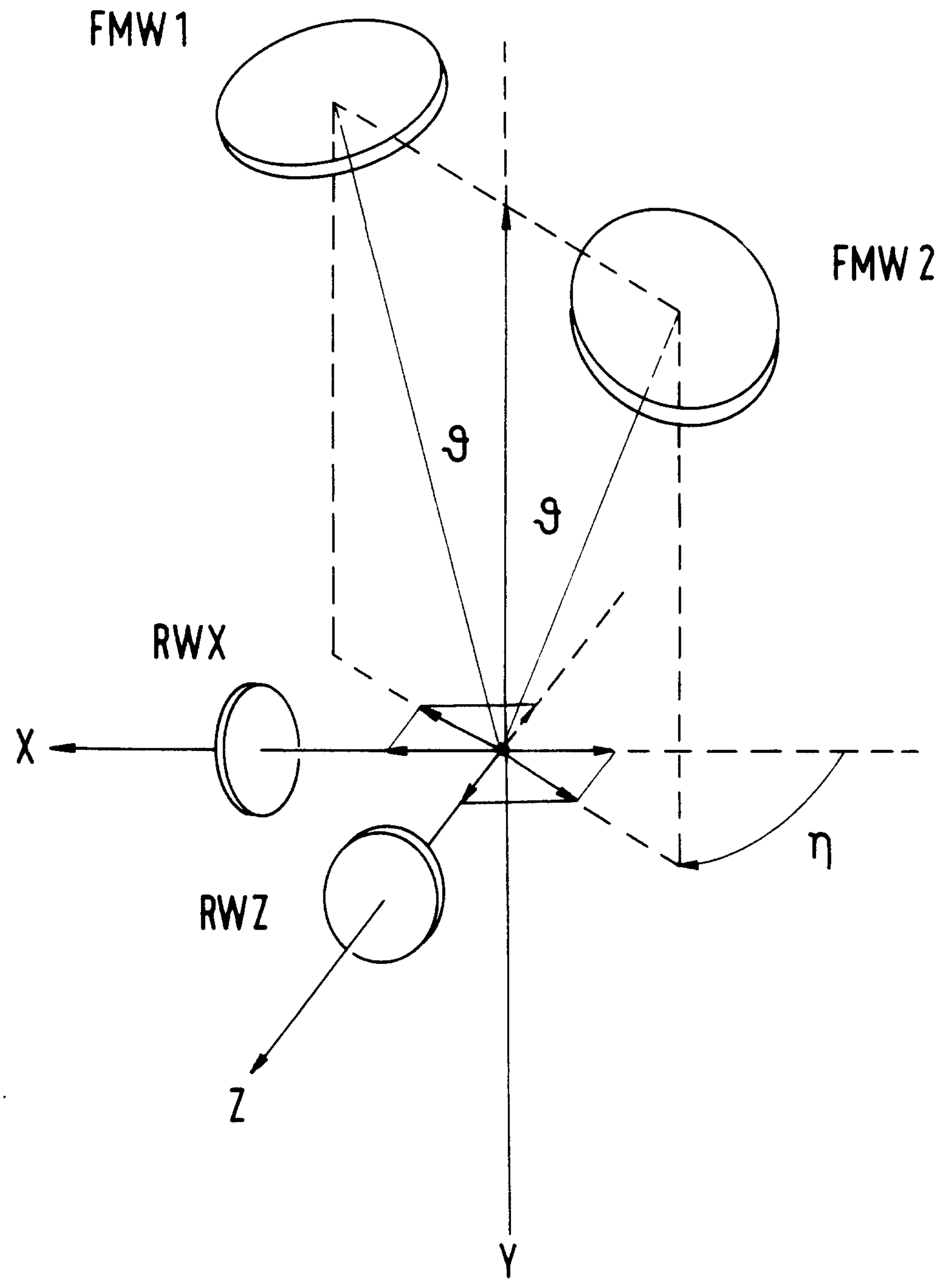

Fig.4

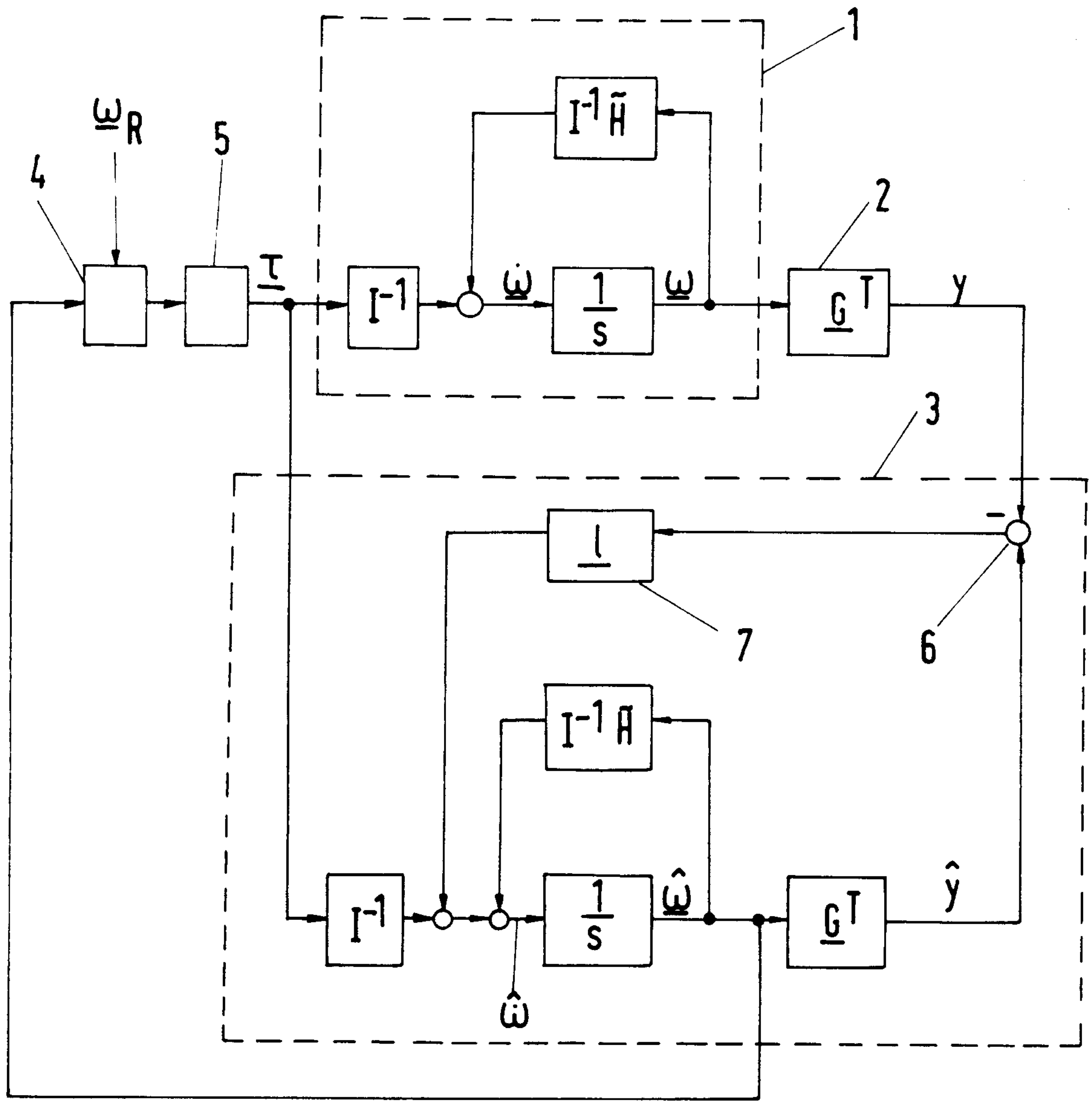
1
2
3
4
5
6
7
$\underline{\omega}_R$
$\underline{\tau}$
$I^{-1}$
$I^{-1}\tilde{H}$
$\dot{\underline{\omega}}$
$\frac{1}{s}$
$\underline{\omega}$
$\underline{G}^T$
y
$\underline{l}$
$I^{-1}\underline{A}$
$\hat{\underline{\omega}}$
$\hat{y}$
$\hat{\dot{\omega}}$

Fig.5

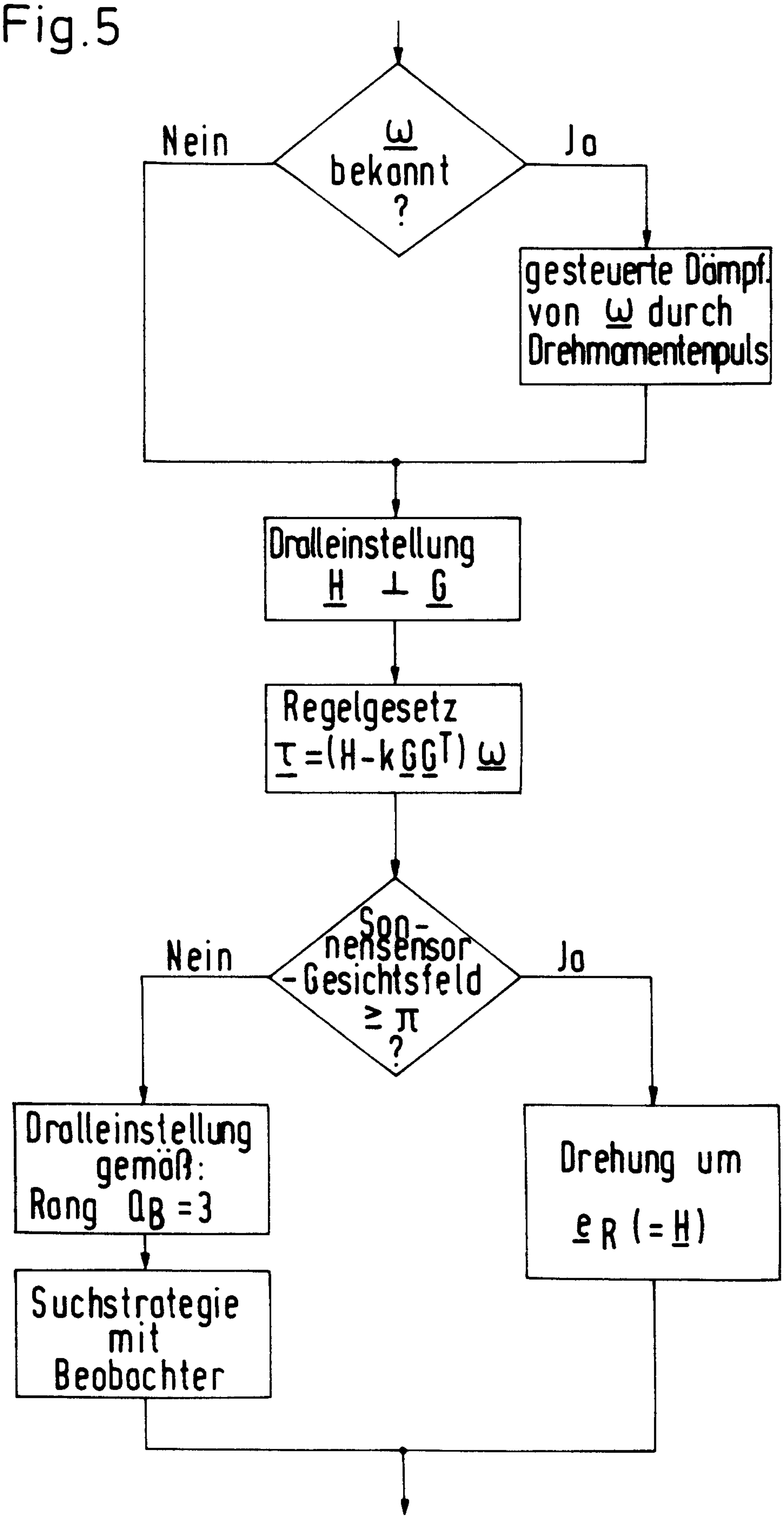
ω bekannt ?
Nein
Ja
gesteuerte Dämpf. von ω durch Drehmomentenpuls
Dralleinstellung H ⊥ G
Regelgesetz τ =(H-kGG^T) ω
Sonnensensor-Gesichtsfeld ≥ π ?
Nein
Ja
Dralleinstellung gemäß: Rang a_B =3
Suchstrategie mit Beobachter
Drehung um e_R (=H)